Europäisches Patentamt

European Patent Office

Office européen des brevets

(19)

(11) Publication number: 0 495 167 A2

# EUROPEAN PATENT APPLICATION

(21) Application number: 91119001.5

(22) Date of filing: 07.11.91

(51) Int. Cl.5: G06F 9/38

(30) Priority: 16.01.91 US 642264

(43) Date of publication of application:
22.07.92 Bulletin 92/30

(84) Designated Contracting States:
CH DE ES FR GB IT LI NL SE

(71) Applicant: INTERNATIONAL BUSINESS
MACHINES CORPORATION

Armonk, NY 10504(US)

(72) Inventor: Bean, Bradford Mason
31A Butterville Road
New Paltz, New York 12561(US)
Inventor: Bierce, Anne Elizabeth
9 Innis Avenue
Poughkeepsie, New York 12601(US)
Inventor: Cristensen, Neal Taylor
23 Brothers Road
Wappingers Falls, New York 10590(US)
Inventor: Clark, Leo James
8 Stormville Road
Hopewell Junction, New York 12533(US)
Inventor: Jones, Christine Comins
3 Loren Drive
Poughkeepsie, New York 12603(US)
Inventor: Krygowski, Matthew Anthony
11 Tamarack Drive
Hopewell Junction, New York 12533(US)
Inventor: Reick, Kevin Franklin
97C Freedom Road
Pleasant Valley, New York 12569(US)

(74) Representative: Jost, Ottokarl, Dipl.-Ing.
IBM Deutschland GmbH Patentwesen und
Urheberrecht Schönaicher Strasse 220
W-7030 Böblingen(DE)

(54) Multiple asynchronous request handling.

(57) Plural requests for storage accessing are processed in plural stages of a storage-request pipeline. Pipeline processing is not interrupted when one or more requests must wait for a resource to start its processing, or when a pipeline stage must process for a long period in relation to the time allocated for a processing operation in the pipeline. Waiting is done in a wait path connected to a particular processing stage in the pipeline. A request is shunted from the pipeline into a wait path when processing the request in the pipeline would delay pipeline processing. When the wait has ended, a request re-enters the pipeline from its wait path. The pipeline is provided in a multiprocessor (MP) in which storage requests are provided asynchronously to a tightly coupled system storage and usually may be handled and processed asynchronously by the pipeline. The pipeline output may direct the processed requests to a shared intermediate cache or to the system main storage.

FIG.1

The invention provides pipeline processing for asynchronous requests for storage accessing in a manner which allows continuous processing of the requests in parallel without having the pipeline processing held up due to one or more of the requests having to wait for a needed resource.

Prior storage request handling means permitted a storage request to tie up a storage resource until the request had completed its use of the resource, which prevented other requests from using the resource during the idle time between operational uses of the resource. In the prior art, the resource would not be released during the idle time, but it would be kept in a non-operational state waiting for the next operation to start for the same request. And the resource was released for use by another request only when the prior request had completed the all operations required of the resource.

Prior patent 3,670,309 (Amdahl et al), and patent 4,149,245 (Gannon et al) teach storage request processing controls but do not disclose a storage pipeline having waiting paths for retaining waiting requests requiring re-entry into the pipeline.

This invention is involved with processing and handling of addresses. This invention is not involved with the processing of the data retrieved with the addresses. Thus, the processing of the data retrieved by storage requests is not pertinent to this invention, such as is done by instruction pipelines. The processing of concern to this invention is the processing done by a storage request pipeline. An instruction pipeline is a different type of pipeline and is not part of this invention.

Unlike an instruction pipeline, the storage pipeline of this invention controls the processing and handling of storage address requests when they need and use storage resources. For example, an instruction pipeline must maintain the received order among its instruction requests. But a storage request pipeline can ignore the received order of its requests and leaves the responsibility of maintaining request sequencing to the issuing processors and their instruction pipelines.

The invention provides a storage request pipeline for controlling the sequence of preparation of a plurality of requests for accessing storage. One or more wait paths are provided that branch from the storage request pipeline to provide a facility that enables the pipeline to continue its processing and handling of other requests while the requests in the wait paths can be awaiting needed resources not currently available to the waiting requests. Two types of wait paths may be provided: one for fetch type requests and one for store type requests. Any number of wait paths of each type may be provided.

Plural requests can be provided in any order to the pipeline in an asynchronous manner by independent processors (CPUs and IOPs) which can be operating in an MP or UP environment.

The pipeline and its wait paths enable the overlapped and parallel coordination of a plurality of storage requests requiring variable-length periods of subprocessing and of waiting. A request in a wait path, for example, may be waiting for: an invalidation to occur in another CPU cache, a CPU prior store completion, cache castout completion, cache priority allocation, main storage (MS) access priority allocation, cache directory updating, MS or cache interleave availability, etc.

After completion of a variable-wait in any wait path due to a required resource becoming available to the waiting request, the request is reentered into the pipeline through the pipeline's priority circuit, used to control the sequence of requests entering the storage request pipeline for processing. The priority circuit may be of the type available in the prior art. A request is processed through the pipeline in a number of steps that prepare the request for its use in accessing the next level in the system storage hierarchy. A request having all needed resources available will have its pipeline processing completed in one pass through the pipeline, but a request not having a needed resource available will be shunted out of the pipeline into a wait path where the resource will wait the availability of its needed resource. An unavailable resource is usually unavailable due to being busy with another request.

A request can cycle one or more times through part of the pipeline and one or more waiting paths. A request will exit from the pipeline to perform its storage request only when its pipeline processing indicates the request is ready for performing the access in the next storage entity in the system's storage hierarchy.

Thus, the invention prevents a storage request from waiting in the pipeline whenever it could cause a bottleneck to pipeline operation, so that the pipeline can operate continuously as long as there are requests able to use the pipeline.

In some cases, processing may be done for a request while it is parked in a wait path. That is, a wait path may be used not only for a request waiting for a resource, but also a wait path may be used for a storage request requiring a long processing step to complete, thereby freeing the pipeline to handle only processing operations that can be immediately performed in a single machine cycle, thereby improving the pipeline performance.

Multiple wait paths may be respectively associated with plural interleaves in a storage hierarchy level to be used by waiting requests.

The subject invention also controls the manner of handling storage resources. That is, the invention can control the release of a resource for use by other requests as soon as a request ends its current use of a resource, such as when a request will need the resource again, but cannot use it for a significant period of time. During such period of resource non-use by the request, the invention can allow another request to use the resource, and thereafter allow the prior request to again use the resource. Thus, the invention allows the multiplexing of partial uses of a resource by multiple requests.

It is therefore an object of this invention to provide a storage pipeline for handling and controlling storage request processing.

It is another object of this invention to provide parallel handling and processing of asynchronous storage requests while allowing partially processed storage requests to wait for handling or processing without significantly interfering with the handling and processing of later storage requests.

It is another object of this invention to individualize each of a plurality of processing steps performed by a storage control resource to make each step usable independently of its other steps, so that the resource can be made available to another request when it has finished a step of processing for another request and allow a prior request to later access the resource for another processing step. Thus, when the resource is not busy performing any processing step it is available for a processing step by another request. Hence, plural requests can multiplex their use of a resource before a prior request that used the resource has totally completed its use of the resource. Then a request does not need to tie up a resource for a predetermined plurality of steps between which the resource is not performing any operation except preventing another request from using the resource.

It is another object of this invention to provide multiple waiting paths in conjunction with a single storage pipeline for concurrently managing plural asynchronous storage requests.

It is another object of this invention to allow multiple storage requests to be held in parallel in independent waiting paths until respective waiting ends, and then enable the request to re-enter the pipeline.

It is another object of this invention to allow resource acquisition for a request when the resource can be immediately used for a processing step, and then to relinquish the resource as soon as the resource is no longer being used by the request to allow use of the resource to be then available to another request in order to maximize resource utilization.

It is another object of this invention to bypass pipeline processing of storage requests requiring a long processing step to complete, thereby freeing the pipeline to manage only processing operations that can be immediately preformed in a single machine cycle.

It is another object of this invention to concurrently handle multiple requests with processing steps having variable execution times without requiring the pipeline to stop and wait for any long process to complete.

It is another object of this invention to allow many storage requests to be simultaneously processed in an asynchronous manner. Requests with conflicts or processing delays may be held, partially completed, in waiting paths, while requests not required to wait are allowed to proceed in the pipeline without impediment, thereby maximizing the system throughput. The invention can maintain a required sequence of requests, when necessary, and at the same time not maintain any sequence for requests for which no sequencing is required.

Background

Prior patent 3,670,309 (Amdahl et al), and patent 4,149,245 (Gannon et al) teach storage timing controls but do not disclose a storage pipeline having plural waiting paths with re-entry into the pipeline.

Prior storage request handling means caused a first storage request to tie up a storage resource until the first request had completed its use of the resource (which prevented other requests from using the resource during the time between operations of the resource for the first request when the resource was not operating). In the prior art when a next operation was required for the same request, the resource would not be released but would be kept in a non-operational waiting state for the next operation to start for the same request, and the resource was released for use by other requests only when the resource had completed the sequence of operations required for one request.

Brief Description of the Drawings

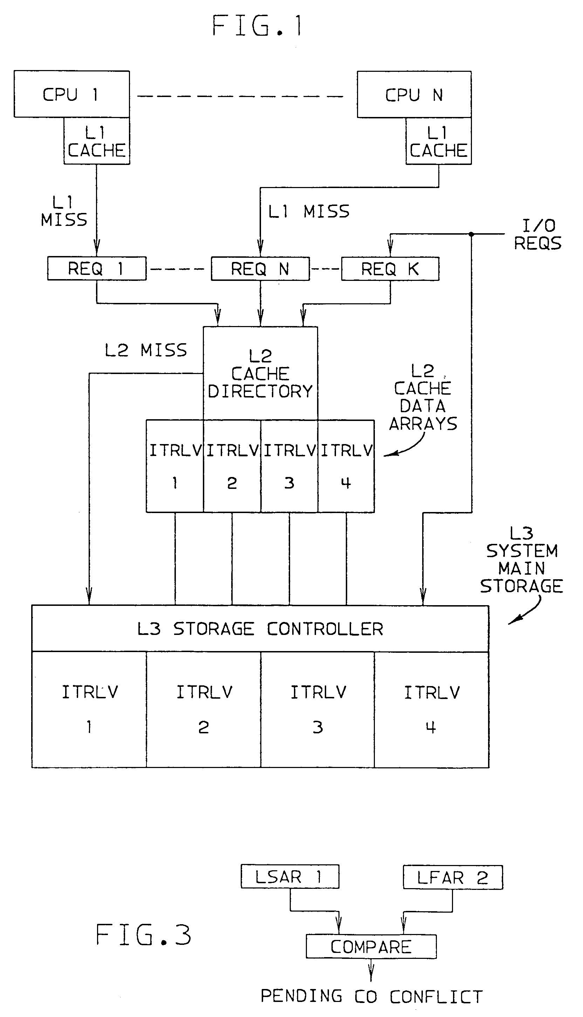

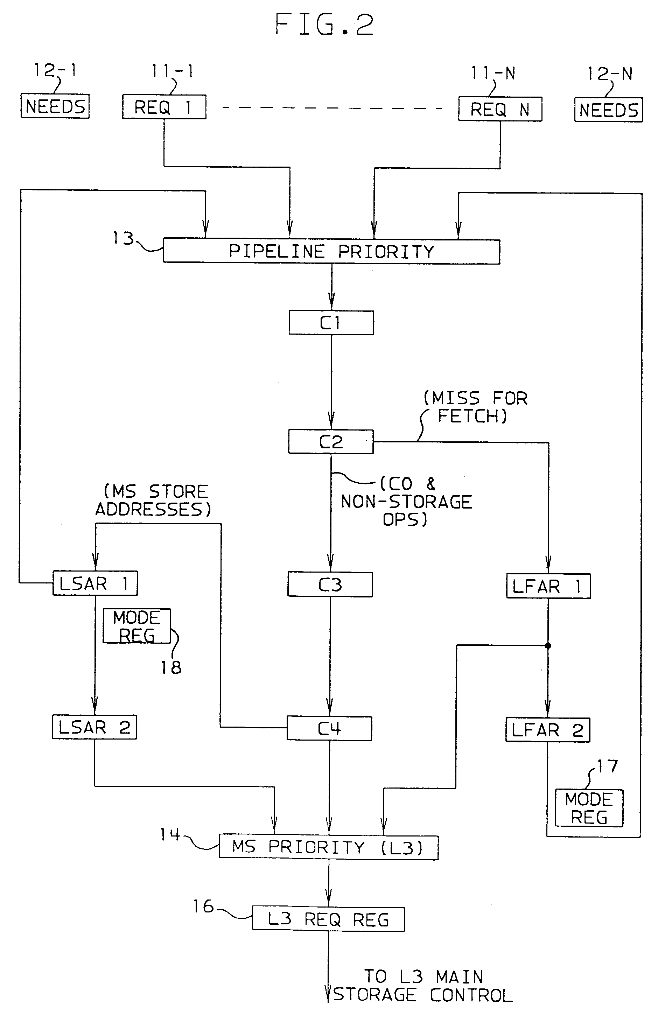

Fig. 1
is a representation of a multiprocessor system containing an embodiment of the invention.
Fig. 2
is a diagrammatic representation of different types of hardware paths in a preferred embodiment.
Fig. 3
is a representation of compare hardware found between a waiting fetch and each store path in the preferred embodiment.
Figs. 4, 5 and 6
are flow diagrams representing exemplary processing steps performed in the hardware of Figs. 2 and 3.

Fig. 7

represents the L2 directory resource.

Fig. 8

represents the L2 changed-line-indicating array connection to the pipeline.

Fig. 9

represents the timing controls for the L2 directory resource used for a fetch in an L2 interleave data array.

Fig. 10

represents the timing controls for the L3 fetch buffer transfer for storing a data unit from L3 main storage into an L2 interleave data array.

Fig. 11

represents the timing controls for an LRU resource for obtaining a new location in the L2 cache.

Fig. 12

represents the timing controls for controlling a cast-out from the L2 cache through a cast-out buffer resource to the L3 main storage.

GENERAL DESCRIPTION OF THE COMPUTER SYSTEM

The subject invention involves the way storage requests are handled in a computer system. Storage requests are provided by a processor (CPU or IOP) which require data from the system memory. There are several types of storage requests, which are generally classified according to the function they perform. A storage request is a request resulting from an instruction operand which requires data that must be retrieved from system storage or requires associated information that must be accessed in an associated storage device such as in a cache directory, cache data array, storage key array, translation lookaside buffer (TLB), or other array related to storage. A storage request is commonly represented by an address of data in system storage and information specifying characteristics of the required storage access, such as whether the access is a fetch or store, or other access such as a change in a storage key array or an invalidation in a related storage entity like a TLB, cache directory or storage key array.

Fig. 1 shows storage hierarchies provided for a plurality of central processors (CPUs 1 through N). A storage request from any central processor first tries to access requested data from its fastest sources, which is a private processor cache (L1) which only the respective CPU can access. If the requested data is not available in the L1 cache, an L1 miss signal then represents the request as it is sent to a second level cache directory (L2 directory). The L2 cache is a store-in type of cache in the preferred embodiment.

And if the data is not available in the L2 cache, an L2 cache miss signal then represents the request as it is sent to the system main memory (L3). The storage levels in the hierarchy become larger in storage capacity and increase in access time as a request needs to go lower in the hierarchy to access requested data.

The L2 and L3 data storages are each divided into four interleaved data arrays to allow up to a four way overlap in the accessing of up to four requests at the same time in each of the L2 and L3 storage entities.

Different processors in the illustrated system of Fig. 1 operate through different storage hierarchies. Their hierarchies are different because they have different L1 caches, although the L2 and lower parts of their hierarchies are common to all CPUs.

However, I/O processors (IOPs) in the system may not have a high speed cache like a CPU, and the fastest storage level in the I/O storage hierarchy may be the L3 main storage. In Fig. 1, I/O storage requests are handled differently from CPU requests by being directed to the L3 system main storage by the IOPs. Nevertheless each I/O request must be checked in the L2 store-in type of cache to determine if L2 contains a CPU updated version of the I/O data being accessed in L3. If an updated version is found, the L2 data unit is sent to the I/O using the castout data path to L3.

Special storage requests are provided to access special types of data in places other than the L2 cache or L3 main storage, such as may be stored in a storage key array or in a TLB, or another type of storage unit associated with the control of the system storage. The special storage requests have a form that enables them to be recognized in circuits handling the requests. The form of the requests (provided in a storage command) includes control bits that indicate if the request is to fetch or store data in the system memory or in another storage resource that affects the control of stored data in L2 or L3.

The preferred embodiment handles storage requests associated with the L2 and L3 levels of the system storage hierarchies, and does not handle L1 storage requests which are handled in the respective CPUs in system. Hence, the preferred embodiment described herein handles requests from CPUs that cannot find requested data in its data cache or its instruction cache and also handles storage requests from I/O devices.

When data is obtained from the L3 storage as a result of an L2 miss by a CPU, the data is simultaneously sent in parallel to the requesting CPU, to its L1 cache, and to the L2 cache data array for being stored therein so that it will be available to any subsequent storage request for that data. In order to put the L3 data into the L2 cache, it may be necessary to overlay data previously stored in a location assigned to receive the L3 data (thereby requiring castout of the previous data).

The L2 cache in the preferred embodiment is a "store-in" type of cache. A store-in cache allows the storing of new data within any data unit contained within the store-in cache without copying the updated data to the L3 main storage. Hence, the L2 cache may contain the only updated data in the system. Accordingly, it is essential to cast-out updated data in L2 and store it in L3 before the updated data is lost in L2 by a reassignment of its location in L2 to other data, causing the updated data to be written over (overlayed) with new data. A cast-out process is provided for updated data in a reassigned location to prevent this problem from occurring.

The L2 cast-out (CO) process requires that an indication be maintained with each L2 directory entry about whether each entry has been changed since it was initially written into L2. This indication is maintained in a change bit array associated with the L2 directory, in which each change bit corresponds to a respective entry in the L2 directory to indicate if the associated entry has been changed or not.

The L2 and L3 memories are each interleaved. Each memory is physically divided into equal portions (called interleaves) that store data according to an address characteristic of the data unit being stored, such as the value of a set of bit(s) at a predetermined location in a requested data unit's address, usually the lowest order part of the data unit address. For example, 2-way interleaving may be determined according to whether the requested data unit has an odd or even address (determined by the value of its lowest order bit), and 4-way interleaving is determined by the value in the two lowest-order bits in the address of the data unit, etc. Only the addressed interleave section of memory containing a requested data unit must be accessed, which allows the other interleave sections to operate independently on accessing other requests at the same time.

Each entry in the L2 directory represents a unit of data in the L2 data array. The size of the unit of data in the L2 data array is predetermined to be convenient for the system to handle, for example, it may be a 256 byte data unit (DU) in the preferred embodiment. The DU is also the DU used in the L3 system main storage in this embodiment.

Accordingly, the L2 cache is structured as a four-way interleaved cache so that its four sections can be simultaneously accessing four different storage requests at the same time. And the low order two bits of the DU address to be accessed in the L2 cache are used to determine which of the four interleaved arrays is selected for a particular request.

In this embodiment, the size of any CPU's L1 cache data unit is 128 bytes; hence an L2 DU has two L1 data units. An L1 store operation in L2 overwrites double words in one of the two 128 byte halves of an L2 DU, which is selected by the state of the low order bit in the address of the L1 data unit.

Thus, each entry in the L2 directory represents an associated one of the 256 byte data units of four L2 interleaved data arrays (ITRLVs 1-4). And likewise each change bit in the change-indicator array is associated with a respective L2 DU, and when set on, indicates the respective data unit has been changed. Also the same size DUs (256 byte data units) are used in the L2 main storage comprised of four L2 interleaved data arrays (ITRLVs 1-4), each of which has a much greater capacity than each L2 interleaved data array.

The I/O system may transmit data units that are as small as one byte in size to or from any L3 DU. Although the storage requests from I/O device channels are directed to the L3 system main storage for both fetches and stores, it is necessary to also examine the L2 directory for each I/O fetch or store operation in L3 in order to determine if the address of an I/O byte unit is also contained in any L2 DU. If the I/O byte address is contained in any DU in the L2 cache, the state of the change bit of the L2 DU must be examined to determine if the data unit has been changed in L2. If its change bit is set on, it indicates the L2 DU has been changed in some manner which could be the I/O addressed byte. Since the corresponding L3 DU has not been updated (since L2 is a store-in type of cache), the updated L2 DU must be cast-out to L3 before the I/O byte can be fetched or stored in that L3 DU, in order to maintain the integrity of the data in the system.

But if the I/O request address is not found in the L2 directory, then no further L2 cache operation is required; and the I/O byte access can proceed in L3.

When a computer system has multiple CPUs, the architecture of the multiprocessor system (MP) generally does not allow more than one CPU at a time to change data in system storage, or to use any data in the process of being changed in any memory location, in order to maintain data integrity in the system. But such architecture generally allows any number of CPUs to concurrently fetch and use data from the system memory when the data is not in the process of being changed. Accordingly, when each CPU has a private cache (L1) and one CPU wants to store into a data unit in L1, that CPU must first obtain exclusive control over that data unit in the memory system. This is done by either interrogating the private caches of the other processors in the system, or by interrogating a CPU identifier field associated with the addressed DU entry in L2 to determine if any L1 cache has copied data from the same DU address in L2. If any other L1 cache is found to have a data unit for the same L2 DU, its L1 entry is invalidated in its L1 directory. Then only the CPU or IOP making the store request has exclusive control over the data unit, in whichever storage unit it currently is valid.

Each storage request requires several types of processing (i.e. storage request handling). The handling of a storage request may involve only one processing step, or it may involve plural processing steps, depending on the location of the data in the data hierarchy. For example, a processor storage request may require a search of a L1 cache directory, which will change the form of the storage request to either a L1 cache hit request or a L1 cache miss request. A L1 cache hit request causes the single processing step of accessing requested data in the associated L1 cache data array, which may be done in a single machine cycle. A L1 cache miss request causes the plural processing steps of:

1. Addressing any next lower level in the storage hierarchy (which may be to an L2 cache, or may be to the L3 system main memory when there is no L2 cache);

2. Fetching the data from the next lower level; and

3. Updating the L1 directory that generated the cache miss request for which the lower level fetching is being done.

One or more system resources are used in the handling of any storage request. For example, the L3 main memory is a system resource required for fetching a L2 cache miss request. Other system resources include the L2 cache array required to receive the data fetched from memory, and the L2 cache directory that must be updated with the memory address of the fetched data in response to an L1 cache directory miss. Each of the four interleaves in the L2 cache data array is considered a respective storage resource when the L2 cache is interleaved. And each of the four interleaves in the L3 main storage is considered a respective storage resource when the L3 main storage is interleaved. Also the change bit array is a system resource, as is the storage key array, and the TLB of each processor, etc.

An important characteristic of this invention is in the way it handles a system's storage resources, compared to the way the resources have been handled in the prior art. The prior art ties a resource to a request from the first processing step until the last processing step required by a storage request. The consequence is that the resource is not available to any other storage request when the resource is not doing processing, which is between the processing done for each of plural steps required by a storage request. For example, in the prior art a cache directory (the resource) is tied up from the time it does its first processing step (a search for a storage request that obtains a cache miss) until the time of its second processing step (writing into the directory the address of the data fetched for the miss); a large number of machine cycles can intervene between these two processing steps during which the directory is not available to any other storage request. This invention allows a storage resource to be used for processing one or more steps for other requests between the steps required by a storage request that has started using the resource but requires other steps be processed before ending its use of the resource.

Because many CPUs may be having storage request misses in their L1 caches that may overlap in time and be concurrently accessing the L2 level along with IOP requests, a "traffic cop" function is required to control the multiple access complexities at the L2 level in a manner that allows the request traffic to proceed without allowing some requests to unduly delay other requests. These complexities include the potential contention of multiple storage requests for the limited resources that handle the L2 storage requests, such as the one L2 directory, the four interleaved cache data arrays, the LRU controls for entry assignment in the L2 directory, the L2 cast-out controls, etc. The preferred embodiment performs this traffic cop function.

Some of these resources may perform more than one type of processing step, such as the L2 directory having a processing step for searching for a request, and another processing step for having an LRU entry assigned. Each of the four L2 cache data arrays can perform the processing step of fetching a DU or the processing step of storing data in a DU or the processing step of casting out a DU, etc. But any L2 data array or the L2 directory can only do one of these processing steps at any one time. These are called "multiple step resources".

Prior art techniques allowed a request to claim the use of a multiple step resources until the request released the resource upon being done with the resource; and thereby prevented the resource from being available to any other request during the time it is not doing any processing step for its claiming request. Then the resource is not available between the processing steps it is doing for the claiming request, and only becomes available to a next request after it has completed all processing steps for the claiming request.

This invention does not bind a resource to a request until the time the request releases the resource. Instead, the invention binds the resource to a request for only a single step, with an automatic release of the resource at the end of the step. This provides a late binding of a resource to only a single step with an automatic release at the completion of that step. Then the resource becomes immediately available to any other request for any processing step the resource is capable of doing. Accordingly, the invention allows each resource to be continuously busy performing processing steps for different requests in any order.

Consequently, this invention allows a multiple step resource to be used by any request before another request has finished a sequence of processing steps that use the resource. Any other request may intervene to use the resource whenever the resource is not being used for any processing step by any request, regardless of the order of the processing steps being done by the resource for any asynchronous sequence of requests requiring the resource.

Hence, the invention does not tie up a storage resource between plural processing steps required by a storage request of the resource, as is done in the prior art. The prior art ties up a storage resource on a "request basis" (i.e. for an entire request, regardless of whether the request exists for only one or for plural steps). But the invention ties up a storage resource only on a "single processing step basis" (regardless of whether the request exists for only one or for plural steps).

The concept of the "request independence for the processing step of multiple-step resources" described herein enables independent use of the individual processing steps done by a request handling resource. Each resource processing step is considered by this invention as a "unit of request processing" performed by a storage request resource. The invention gains its advantage from the use of multiple-step resources (that perform more than one processing step), and individualizing the respective steps so that each step can be separately initiated and ended. This allows any storage processing step for a resource to be used by any request during any wait state of the resource.

This is in contrast to the prior art, which tied a multi-step resource to the sequence of processing steps performed by the resource, so that each time the resource was used by a request, the resource was interlocked with that request for the entire sequence of processing steps required in the use of the resource. That is, the prior art tied a request to a resource until the request completed using the resource. The consequence of such prior request/resource interlock was that the resource was not available for performing any operation for another request between different step operations being performed by the resource when the resource was not performing any processing step.

For example in the prior art, when a request missed in a cache directory, the cache directory and the cache data array (two resources) were tied to the request (i.e. not available for use by any other request) until the following sequence of steps were completed for a fetch request: a cache search performed and a miss signal generated, data fetched in MS for the miss signal, the data is written in the cache data array, and the MS address of the data is written into the cache directory. Each of these step operations took very few machine cycles, but the wait between some of these steps took much longer, such as between the miss request in the directory and the time the data is returned to the cache data array, during which both the directory and the data array are waiting for MS to fetch and return the data and are not available for use by any other request.

The invention eliminates the prior tying of a resource to the completion of each request of a resource. The invention allows each step operation for a resource to be done independently of each other step operation done by a resource. This invention obtains its step independency by automatically releasing a resource at the end of each processing step, so that a resource can then be allocated to any request requiring the resource for any processing step the resource was capable of performing, which need not have any relationship to other requests using the resource before or after the current processing step.

The storage request handling system of this invention has the following characteristics:

1. Continuously receives storage requests without concern for the existence of prior received incomplete requests.

2. Has waiting paths for parking incomplete storage requests waiting for processing to start and/or continue.

3. Processes multiple storage requests concurrently.

4. Asynchronously completes storage requests being processed.

Detailed Description of the Embodiment

Fig. 2 shows the storage request handling circuits of the preferred embodiment. It services all storage requests received from all central processors (CPUs) and I/O processors (IOPs) in a computer system, and has the circuits of this invention for handling the storage requests to the L2 level of the system. It handles all storage requests for accessing data both in an L2 cache (common storage buffer) and in system main storage (MS), as well as handling all non-accessing types of storage requests. The accessing requests include the following commands: an instruction fetch, a data fetch, and up to sixteen store requests from each CPU, and a total of eight requests from any IOPs.

The storage requests are received by a respective request register 11. Each request register is dedicated to a particular source of storage requests, a particular CPU or IOP. Each request register also has an associated "needs register" which contains status fields that indicate whether a contained request needs any prior processing before it can be transferred to the pipeline.

All requests in the request register not having an indicated need are vying for priority by providing a request signal to a priority circuit. It grants priority on each machine cycle to one of the requestors to enter the pipeline as long as one or more valid request(s) exist in the request registers. The request given priority is transferred into a first pipeline register C1. Each request is moved through the pipeline registers C1, C2, C3 and C4 in that order and stays in each of these register for one machine cycle. A request may have its processing completed before it reaches the end of the pipeline, and it is invalidated in any of these registers if it completes its processing.

Storage Request Pipeline Input from Processors:

Fig. 2 is a diagram of the preferred embodiment. It has a plurality of input registers 11-1 to 11-N, each of which can receive a storage request (in the form of a command) from a respective CPU or IOP. Since each register 11 may be connected to a respective CPU or IOP, each register 11 may be dedicated to receiving storage requests from one source.

Each request provided to a register 11 contains address bits (representing a data unit address in L3). Also each request contains operation bits that indicate the operation to be performed by the request (e.g. fetch or store operation) and tag (or flag) bits that indicate properties of the request such as whether is the fetch operation is for a fetch request or for a store request or if the fetch is to be done in the system storage or in a special array such as the storage key array, etc.

Each input register 11 has an associated "needs register" 12 which contains indicators that show whether the request in the associated register 11 has a need which must be satisfied before the request can be sent to the pipeline for storage processing, such as whether some exception condition exists that must be cleared before the request can be processed. Each needs register 12 indicates either a needs condition or a no-needs condition by means of either a no-needs status bit or a predetermined value of the bits in the no-needs register, such as zero. Only if a no-needs condition exists for a request in an input register, the request is ready to enter the pipeline. An indicated "needs" condition prevents its request from entering the pipeline, and the needs status continues until the condition is satisfied.

Only the requests currently in input registers 11 having a no-needs indication can compete for priority to enter the pipeline, of which one request may be given priority on each machine cycle to enter the processing pipeline and start its processing, as long as there are no-needs requests in any one or more of registers 11 requiring the pipeline. Accordingly, the pipeline may continuously receive a request on each machine cycle from a register 11 as long as any register 11 contains a no-needs request. The register content remains valid until processing of the request is complete and a completion response is returned to the requestor.

Pipeline Structure:

In Fig. 2, the pipeline is constructed of stage registers C1, C2, C3 and C4, which are connected in a shift register manner, in which a request is shifted in parallel from one register to the next in the order C1 to C4, and each stage register contains a request for only one cycle. Register C1 provides the first stage in the pipeline, and it receives each request from any of input registers 11, which is the one granted priority by priority control circuits 13. In a shift register manner, each pipeline stage register receives the request in its predecessor register in the pipeline and holds it for one machine cycle, and passes the request to the next register in the pipeline for the next cycle of processing.

The processing of the requests is not done in the staging registers C1-C4. Each staging register has one or more resources associated with it and one of the associated resources does a processing step during the one cycle the request is being held in the respective staging register.

Thus, when each pipeline staging register receives a request, it initiates a processing step for the request in an associated resource. The resource selected, and the processing step initiated in the resource, are determined by status bits carried with the request, herein called "mode" bits.

A request in any pipeline staging register gets a processing step done during the staging cycle if the required resource is available (not busy) at the beginning of that cycle. If the required resource is not available, the request will be sent out of the pipeline into a selected waiting path in which it will wait until it is able to make another pass through the pipeline to obtain the processing step from the next required resource.

Hence, it takes four cycles to pass a request through the pipeline if the required resource is available at each stage in the pipeline and no condition exists that could cause the processing step to take longer than one cycle to complete when the request is in each respective pipeline staging register C1, C2 C3 or C4.

Waiting Paths:

A request is sent out of the pipeline into a waiting path to avoid holding up the processing of the following pipeline requests, when a resource required by a pipeline stage is not available at the beginning of the respective pipeline cycle. A request may wait in a waiting path for as long as necessary.

When a request in a waiting path is ready to continue its next pipeline processing, the request obtains priority from the same priority means 13 that determines the pipeline priority of all storage requests wanting to re-enter the pipeline. Each waiting request that becomes ready for pipeline processing control vies for priority with all processor requests. The priority contention is only among requests in registers 11 that have a "no-needs" status indicated in an associated needs register 12.

There are two types of waiting paths used in the preferred embodiment. One type is a fetch waiting path, in which a delayed fetch request waits. The other type is a store waiting path, in which a delayed store request waits. There are four fetch waiting paths and four store waiting paths in the preferred embodiment, in which one fetch waiting path and one store waiting path is associated with each of the four L2 data array interleaves ITRLVs 1-4 in Fig. 1. A particular waiting path is selected for a held-up pipeline request according to the interleave selection characteristic in the request address and whether the request is for a fetch or store.

Each waiting path includes two registers for holding a request. A fetch waiting path includes registers LFAR 1 and LFAR 2. A store waiting path includes registers LSAR 1 and LSAR 2. A fetch request obtains priority when it is in the LFAR 2 register.

A fetch request is first put into LFAR 1 when it enters the waiting path. While in LFAR 1, a fetch request is contending for L3 priority in an MS priority circuit; the contention may be with waiting requests in other wait paths and with any request having its process step being completed in pipeline register C4. In LSAR 1, a store request is contending for pipeline priority in order to get a processing cycle in the L2 line change array to determine if the L2 entry (assigned by the LRU circuits to the request) needs to be cast-out because its data was changed in L2; if not changed in L2 the LRU assigned entry need not be cast out because it has an identical L3 entry.

Mode bits in a respective mode register associated with a waiting request in LFAR 2 and LSAR 1 are set by means in the waiting path to indicate which step the request processing has reached status which is indicated to the priority circuit L3 for enabling the waiting request to re-enter the pipeline.

Special requests require resources that do not have the contention involved with the resources used by requests to system storage, and are available at each stage in the pipeline, and they do not need to use waiting paths.

An example of a no-wait pipeline operation is as follows for a fetch operation: The resource used by the first cycle C1 of pipeline operation is the L2 cache directory, which is accessed by the fetch request in register C1 (the L2 directory is assumed to be available). A hit in the L2 directory is assumed for the request.

During the C2 cycle of L2 directory processing, the request is received in staging register C2 for the second pipeline cycle of processing. A resource used during the C2 cycle includes the L2 exception detection hardware, which then is examined for any indication of any exception condition. (No exception is assumed in this example.)

During the C3 cycle, the request is received in staging register C3 for the third pipeline cycle of processing. The resource used during the C3 cycle is an L2 cache data array interleave, which is selected by detecting the value of the two lowest-order bits of the DU address which was obtained from the hit in the L2 directory indicated during the C2 cycle. The addressed DU is fetched from the selected L2 cache interleave data array.

During the C4 cycle, the request is received in staging register C4 for the fourth pipeline cycle of processing. The resource used during the C4 cycle is data busing hardware for transmitting the fetched DU from the selected L2 data array to the requesting processor and to its L1 cache. The processing is then ended for the request.

Most requests are expected to use the storage pipeline without using any waiting path. But the relatively few requests requiring a wait would greatly impede the operation of the pipeline if such requests were allowed to wait in the pipeline, because then each waiting request would stop the processing of all following pipeline requests during its waiting time.

Pipeline Operation With the Waiting Paths:

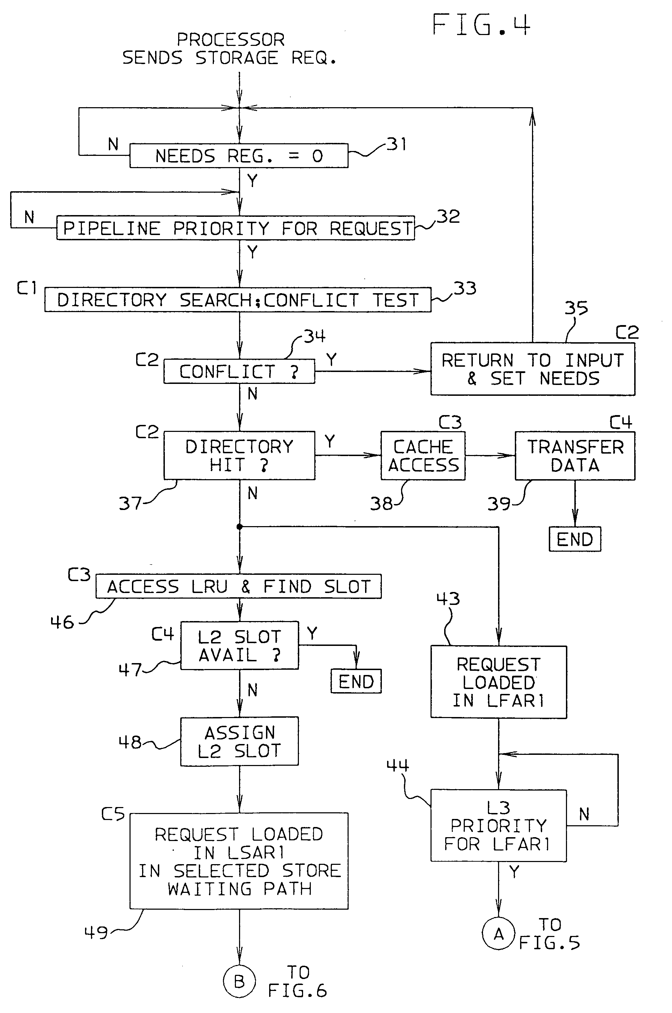

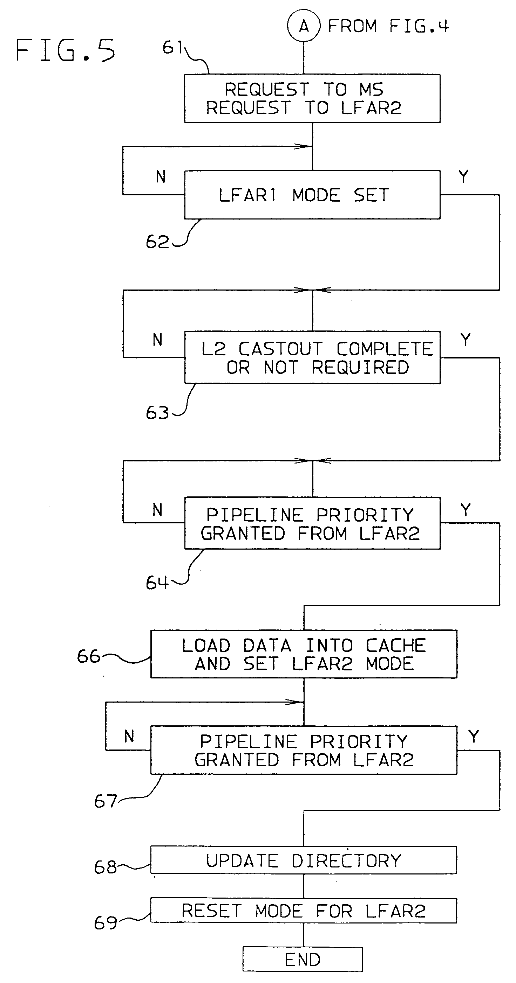

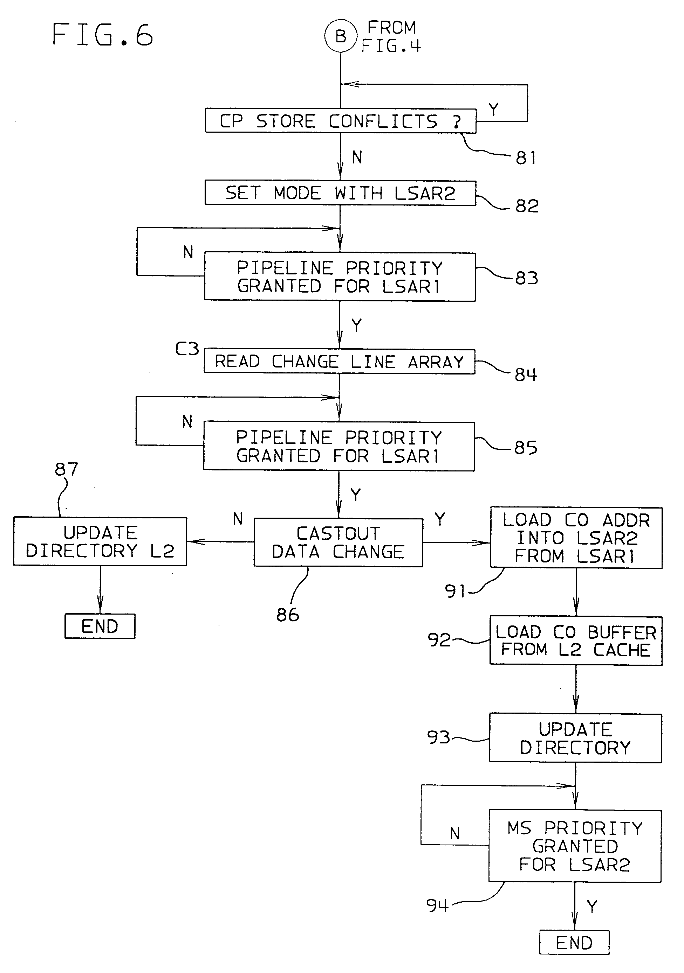

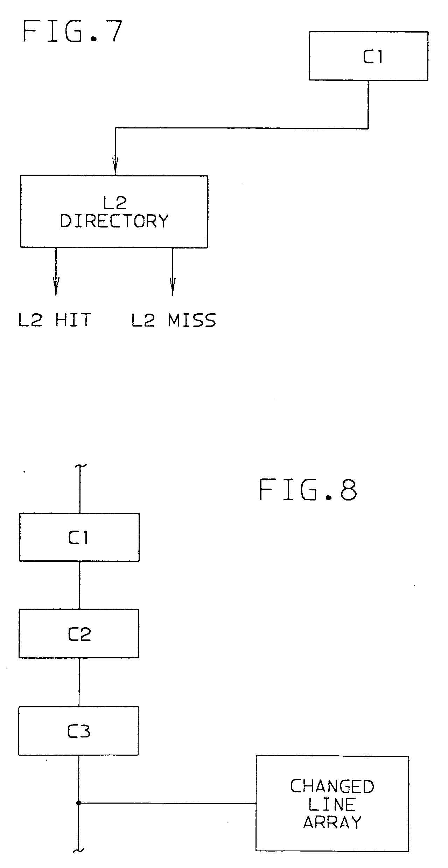

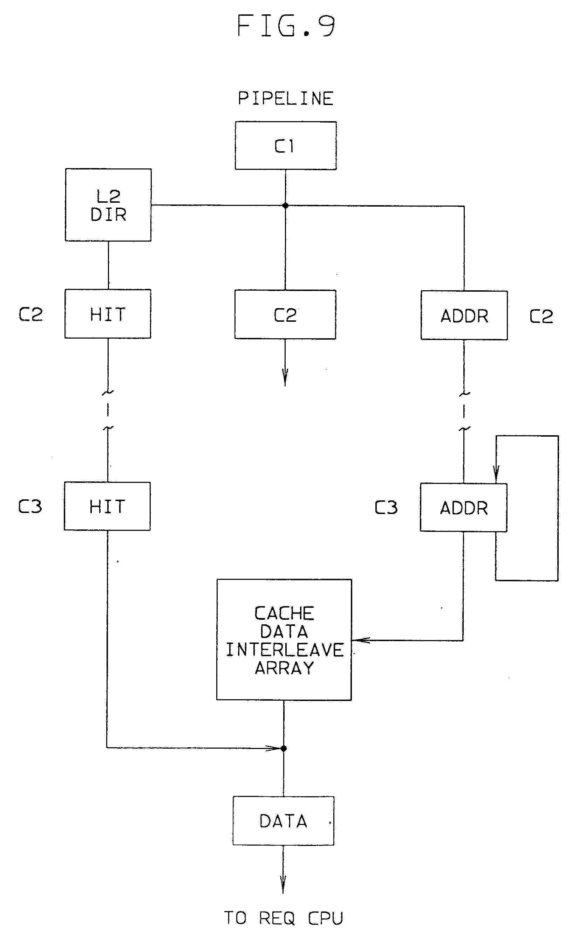

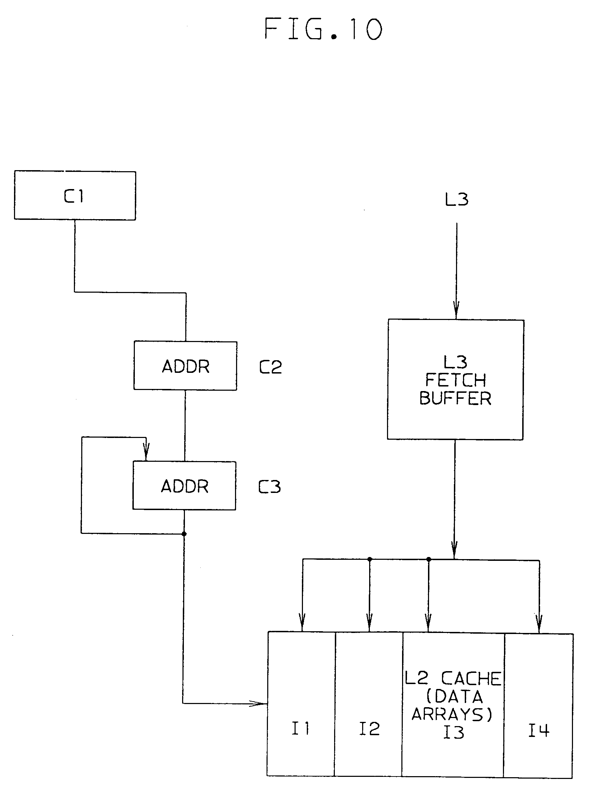

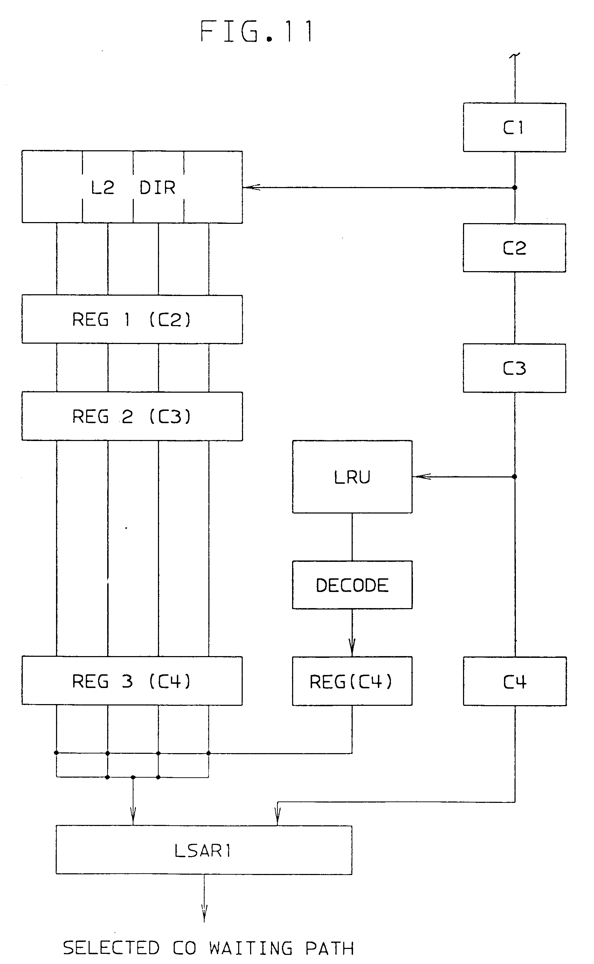

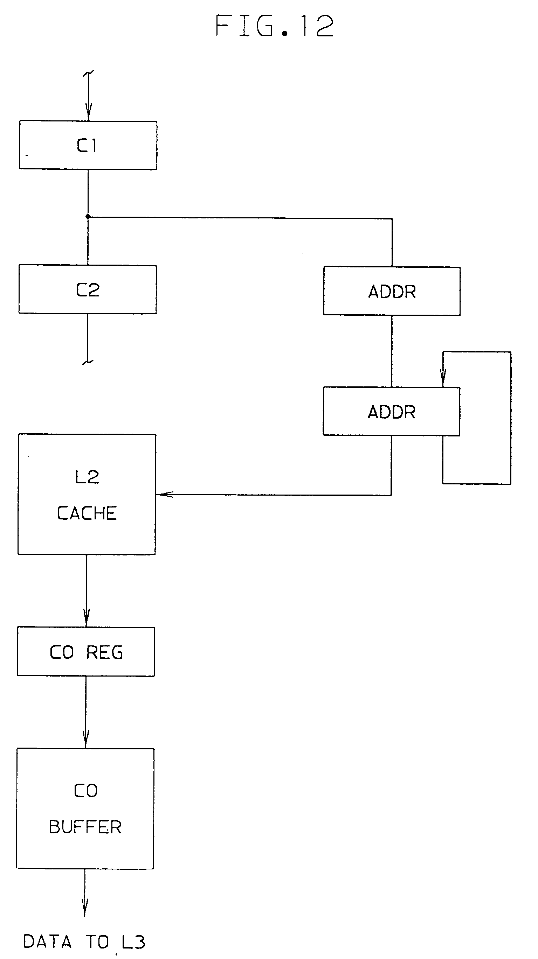

Figs. 4, 5 and 6 provide flow diagrams showing the resource operations associated with the staging cycles in the pipeline and its waiting paths.

In Fig. 4, box 31 represents the priority process examination of the contents of the needs registers 12 of all pipeline input registers 11 to determine which have an all zero content which indicates a request has no needs to be satisfied, and therefore is a candidate for obtaining priority for entering the pipeline. Box 32 represents the giving of priority to a candidate request by the priority circuit, which transfers the request to pipeline staging register C1.

Box 33 represents a processing step performed by the L2 directory resource during pipeline cycle C1. This processing step searches the L2 directory to find if the request is represented therein and performs tests to determine if any conflict exists in obtaining the use of the L2 directory.

When the C1 cycle is completed, the request is transferred to staging register C2 for doing the conflict and directory hit processing operations of boxes 34, 35, 37, 43 and C3 during the second pipeline processing cycle.

Box 34 determines if any conflict was detected and indicated during the test of box 33 during cycle C1. If a conflict is indicated, box 35 is entered to take the request out of the pipeline by putting it back into its input register and setting the associated needs register to a non-zero state to indicate the existence of the conflict condition. The needs condition must be satisfied before the associated request can again vie for pipeline priority. Then the request must again go through the priority circuit to re-enter the pipeline.

When a fetch request (for either a fetch or store operation) is given priority and put into the pipeline register C1, a search is performed for the request in the L2 cache directory using an MS data address which is part of the request. The request is then passed to the next pipeline register C2 for operation during the next machine cycle, in which the request is tested for being in a state capable of pipeline handling. (A directory search request is started in C1 before it is tested in C2 to start any fetch operation at its earliest possible time to maximize its overlap with C2 operations, if required.)

If the C2 testing operation determines that the required resource is not available, or detects an address-compare conflict, then that request is 'rejected'; and the request is reinitialized in its input register to again ask for priority. An associated "needs" triggers are set for the request to indicate that it had at one time been granted priority and identify the needed resource or the conflict found.

Thus, if a request in C2 is found not in a condition capable of pipeline handling, an exception signal is outputted to signal an abnormal condition requiring special handling. One of these abnormal conditions is a "set needs" condition, which indicates the request is not yet ready for pipeline handling, in which case the request is put back into its input request register and associated "needs flags" are set in an associated "needs" register. When the "needs" is later satisfied, the request can again vie for pipeline priority.

If box 34 finds no conflict occurred, box 37 is entered to determine if a directory hit or miss indication was set during the search of cycle C1. If a directory hit is indicated, box 38 is entered to select the L2 cache data array (ITRLV 1, 2, 3 or 4) using the DU address in the request for fetching the requested data in the selected array. Then the request is transferred to pipeline staging register C4, and box 39 is entered to select the L2 data bus that transfers the data from the L2 data array to the requesting CPU or IOP, according to processor ID bits carried in the request.

But if box 37 detects an L2 cache miss, the L2 miss indicates the requested data is not accessible in the L2 cache and that plural cycles will be needed to obtain the data from the L3 system main storage. Then the request is transferred into the C3 pipeline register, and box 43 selects a fetch waiting path by using the address information in the request that determines its MS interleave selection (e.g. the low order part of the DU address with the request), since in the preferred embodiment each interleave is associated with a respective fetch waiting path which is selected among the plural fetch waiting paths for requests directed to the respective L3 interleave.

The fetch request requires an L2 entry, so that box 46 represents the accessing of the L2 directory's LRU circuits during pipeline stage C3 to determine if a slot exists in the L2 directory for receiving an L3 representation of the fetch request address and related information. Then box 47 determines if an L2 slot is available, and if one is available no cast-out is caused by the fetch request, and operations for a cast-out are ended.

If no slot is available in L2, the "no" exit is taken from box 47 to box 48 for an L2 cache slot assignment, which here uses a processing step with the LRU array and circuits resource for finding if an L2 location exists, and assigning a slot in the L2 cache directory if no available L2 slot is found.

The slot assignment by box 48 is done during the C4 pipeline stage operations by a processing step with the LRU array and circuits resource, which then assign a slot in the L2 cache for the fetch request. The assigned slot may contain data that has been changed in L2 and be the only version of its data in the system. In such case, the data must be cast-out before the fetch is put into the slot. But any cast-out is potential at this time because it has yet to be determined whether any current data in the assigned slot has been changed or not, since a cast-out is done only if that data had been changed.

When an L2 cache miss causes the no exit to be taken from box 37, the address of the cache miss causes a reservation to occur for the addressed one of the four L3 interleave data arrays and its associated fetch waiting path and store waiting path. Thus, the waiting path assignments are done in this embodiment by the data unit (DU) address in L3 of the fetch request. These waiting paths will be released when the fetched data is returned from L3 in this embodiment. (In other embodiments, the waiting path assignments can be done in a more complex manner to allow more flexibility in the assignment of the waiting paths.)

Accordingly, in the preferred embodiment, a cast-out store waiting path and its related fetch waiting path can always easily be found by using the address of the L3 fetch requested DU to find the two related waiting paths.

Also during the C3 cycle, box 43 is entered for loading the fetch request into the LFAR 1 register in the address selected fetch waiting path. And box 44 causes the request in LFAR 1 to signal the L3 request register 16 in Fig. 2 for a priority cycle to access the L3 memory. Then box 61 in Fig. 5 is entered.

And if a cache slot was assigned, box 49 loads the cast-out address (contained in the L2 location assigned to the fetch which is in LFAR 1 in the related fetch waiting path); this is done on the next cycle, called C5. Any cast-out must occur before the fetched data from L3 is received to overlay and thereby destroy the currently contained data in the assigned slot.

(A final cast-out determination is done in Fig. 6 which accesses the change bit array resource and examines the state of the change bit for the assigned L2 slot. If the change bit is set on, it indicates the current data in the assigned location has been changed, and that the L2 store-in cache has the only copy of that data in the system which must be cast out to L3 before it is destroyed by the fetch data in order to maintain the latest version of the data in the system.)

After box 49 loads the request into LSAR 1 in the selected store waiting path, box 81 in Fig. 6 is entered.

The special non-accessing storage requests are each single step request, and each can be handled in the pipeline without the use of a waiting path. It is the requests that must access data in system storage that may encounter wait conditions and force such request to seek a waiting path, in order to prevent it from bottlenecking the pipeline processing of following requests.

Waiting Path Operations:

Generally, the determination of whether a request must leave the pipeline is made in boxes 34 and 37. Box 34 moves a request out of the pipeline by returning the request to an input register when a conflict is found. Box 37 moves a fetch request out of the pipeline into a fetch waiting path when a L2 cache miss is indicated since dozens of cycles of waiting may be required before the requested data is obtained from the L3 main storage. And a store waiting path is reserved (which is associated with the same L2 interleave data array as the fetch waiting path) in case a cast-out is required because of the L2 cache slot assignment for the fetch.

The processing continues for a request in a waiting path, although such processing may be interspersed with long waiting periods. The processing of a request held in a waiting path may require a resource controlled by the pipeline stages after a wait period, in which case the pipeline controlled resource is accessed by recycling the request through the pipeline for accessing the resource. The request does not release its waiting path while it is being recycled through the pipeline for a second or more number of times.

Thus, a request in a waiting path is one whose processing has started but is required to do more processing before it can leave the waiting path, or its processing may be temporarily suspended, or it may have completed its processing and merely be waiting its turn in a priority queue before it can be moved to its next processing step.

Note particularly that a request in a waiting path does not need to "redo" any work, but it has already started its processing, and it is only waiting for an opportunity to go on to the next step. The redo of a request is done only when a request is found by box 34 to have a conflict, and it is not put into a waiting path; but it is moved out of the pipeline into an input register to start its pipeline processing all over again. Thus storage requests sent to a waiting path are not redone, but are merely continuing their processing.

"Mode" bits are associated with a request in a waiting path. The mode bits are placed in a register 17 or 18 in a waiting path to indicate the next required processing step when the request re-enters the pipeline.

The mode bits are set in the waiting path and are used by the request to indicate its next needed processing step. The mode bits are carried with the request when it re-enters the pipeline, and they indicate to each stage in the pipeline (when the request reaches the stage) whether the stage is to perform a processing step for the request, and which processing step is to be performed there.

When any request in a waiting path wants to reenter the pipeline, it contends for priority to the pipeline in a completely asynchronous fashion with respect to all other requests. It is not necessary to give higher priority to requests in waiting paths, although this can be done.

Fetch Waiting Path Processing:

Fig. 6 shows processing steps done in a fetch waiting path. Box 61 represents the fetch request waiting in the LFAR 1 where it is requesting priority of L3 main storage for accessing its fetch request. The request waits in LFAR 1 until a signal is received from the L3 controller indicating that L3 has accepted the request. Then the fetch request is transferred from LFAR 1 to LFAR 2. Box 62 represents the return of the L3 DU. The wait for the L3 data return may be for many dozens of cycles.

Box 62 also represents the setting of the mode bits in register 17 associated with the request (in LFAR 2) to indicate that the assigned L2 directory entry should be updated to represent the fetch request.

Then box 63 checks to determine if any required cast-out has been completed or if no cast-out is required. If yes, box 64 presents the request in LFAR 2 to the pipeline priority circuits as a candidate, so that the fetched data can be written into the assigned slot in the L2 cache when the request goes into the pipeline, see box 66. The mode bits with LFAR 2 are set to indicate the directory needs updating.

Then in box 67, the request in LFAR 2 is again presented to the pipeline priority circuit for obtaining reentry of the request into the pipeline for updating the L2 directory in box 69. And the mode bits are reset in preparation for the next fetch request to be received in that fetch waiting path. Then the processing is ended for the processor request.

Store Waiting Path Processing:

Fig. 6 is a flow diagram of the store wait path processing which is used only if a cast-out is to be done. A cast-out is needed only if the data has been changed in the L2 cache location assigned to a fetch request. The cast-out of data from the L2 cache must be completed before data fetched from L3 is written into the same location in the L2 cache. The initial processing steps for a cast-out operation can be done simultaneously with the initial processing steps for the related fetch operation.

Box 81 tests the address of each store request in the pipeline and in the other waiting paths to determine if there is any store request to the DU being cast-out. This involves a comparison of the cast-out address with the DU addresses of all store requests that may exist in the pipeline, or in the other store waiting paths. If any store request equal to the cast-out address is found, the cast-out processing must wait for completion of all conflicting store requests before continuing to the next box 82.

When box 82 is entered, the mode register 18 associated with LSAR 1 to indicate that the change bit array resource is next to be used in the pipeline, and the LSAR 1 request is presented to the pipeline priority circuits for getting priority to reenter the pipeline, which is represented by box 83. The yes exit of box 83 is taken when the LSAR1 request is granted priority to enter the pipeline.

This next pass through the pipeline by the cast-out request is controlled by the mode bits it is carrying. These mode bits indicate to the C1 and C2 pipeline stages not to do any processing step, but indicate to the C3 stage that a processing step is to be done with the change bit array resource. Next box 84 accesses the change bit array and reads the change bit associated with the L2 slot assigned to the fetch request. The next box 86 tests the state of the read change bit to determine if a cast-out is required from the assigned L2 location. If the change bit indicates no change in the current DU at that L2 location, no cast-out is needed. Then, box 87 is entered to overlay the old data in that L2 slot by writing the address of the fetch request therein.

But if the change bit indicates a change was made in the L2 DU, a cast-out indicator is set to indicate that a cast-out is required of the old data in the assigned L2 cache location. Then box 91 is entered from the yes exit of box 86, and the address of the assigned L2 entry in LSAR 1 now becomes the cast-out address which is moved from LSAR 1 to LSAR 2. Box 92 then loads the DU in the associated L2 interleave data array into a cast-out buffer. Box 93 next updates the directory with the fetch address of the new data to be fetched from L3 when L3 priority is granted to the request currently in LSAR 2. When received the L3 fetched data is written into the L2 data array, and the process is ended for the processor request.

Compares between Store and Fetch waiting Paths:

Compare and control logic in each wait path is used in conjunction with the pipeline to ensure that the processing of requests with inter-dependencies proceed in the correct order, while allowing requests without dependencies to proceed without penalty. For example, testing is done for each request (which is about to have a step processed) against other requests (in the pipeline and waiting paths) to determine that the tested request has no dependency on an incomplete prior store request.

Thus, each request in the pipeline has its address compared against the addresses for all other requestors (including the addresses in all waiting paths LSARs and LFARs) to detect every pending store. These compares ensure that requests which are operating on the same address are handled in the proper order (e.g. fetches to follow a prior store to the same address). Any address not having a compare-equal condition (which indicates a possible addressing conflict) can proceed as rapidly as possible, and be handled asynchronously with all other requests.

## Claims

1. A multiprocessor system having a main storage (L3) shared by a plurality of CPUs each having a private cache (L1), comprising:

   storage request pipeline means for respectively holding a plurality of storage requests from the L1 caches in the process of being prepared for the main storage;

   priority means for receiving the L1 cache requests and gating each request to the pipeline means when given priority;

   waiting path means connected to the pipeline means for receiving a request from the pipeline means either to wait for an unavailable resource needed by the request or to wait while a multi-cycle processing step is performed with a resource for the request, other requests being processed by the pipeline means while a request is held in a waiting path; and

   an output of the waiting path means providing a waiting request to the priority means when the wait time is ended for the waiting request to enable the request to reenter the pipeline means.

2. A multiprocessor system having a main storage (L3) shared by a plurality of CPUs each having a private cache (L1), and a shared cache (L2) between the main storage and the private caches for being accessed by a request having an L1 cache miss, comprising:

   storage request pipeline means for respectively holding a plurality of storage requests from the L1 caches in the process of being prepared for the L2 cache or main storage;

   priority means for receiving the L1 cache requests and gating each request to the pipeline means when given priority;

   waiting path means connected to the pipeline means for receiving a request from the pipeline means either to wait for an unavailable resource needed by the request or to wait while a multi-cycle processing step is performed with a resource for the request, other requests being processed by the pipeline means while a request is held in a waiting path; and

   an output of the waiting path means providing a waiting request to the priority means when the unavailable resource becomes available to enable the request to reenter the pipeline means.

3. A multiprocessor system having a main storage (L3) shared by a plurality of CPUs each having a private cache (L1), and a shared cache (L2) between the main storage and the private caches for being accessed by a request having an L1 cache miss, comprising:

   storage request pipeline means having a plurality of stages for respectively holding storage requests from the L1 caches, stages in the pipeline processing respective requests at a predetermined cycle rate for being prepared for accessing an L2 cache directory;

   priority means for receiving the L1 cache requests and gating each request to an entrance to the pipeline means when given priority;

   waiting path means connected to the pipeline means for receiving a request from the pipeline means either to wait for an unavailable resource needed by the request or to wait while a multi-cycle processing step is performed with a resource for the request; and

   an output of the waiting path means providing a waiting request to the priority means when the awaited resource is available to enable the request to reenter the pipeline means, all requests received by the priority means contending to enter or reenter the pipeline means.

4. A multiprocessor system as defined in Claim 3, further comprising:

   each stage in the pipeline means performing a processing step on a resource for a request for preparing the request to access storage.

5. A multiprocessor system as defined in Claim 4, further comprising:

a connection stage in the pipeline means connected to the wait path, and means for testing the availability state of a resource needed by a request at the connection stage to determine if the request is to be processed for a step at the stage or is to be sent to the wait path.

6. A multiprocessor system as defined in Claim 5, further comprising:

resource release mean for indicating when a needed resource has become available to a request waiting in the wait path, and means for enabling the request to be sent to the priority means for re-entering the pipeline means.

7. A multiprocessor system as defined in Claim 4, further comprising:

a connection stage in the pipeline means connected to the wait path, and means for shunting the request into the wait path when multiple cycles of processing are required for an available resource, or for an unavailable resource, to prevent the resource processing, and any waiting for the resource, from slowing the pipeline processing of other requests.

8. A multiprocessor system as defined in Claim 7, further comprising:

resource release mean for indicating when a multi-cycle resource processing step is ending for a request placed in a wait path to avoid having the multi-cycle step slow the pipeline processing of other requests.

9. A multiprocessor system as defined in Claim 4, further comprising:

a plurality of wait path means having inputs respectively connected to one or more stages of the pipeline means for enabling a plurality of requests to be held while processing of other requests continues in the pipeline.

10. A multiprocessor system as defined in Claim 4, further comprising:

a plurality of wait path means having inputs respectively connected to the same stage of the pipeline means for enabling a plurality of requests to be held while processing of other requests continues in the pipeline, the requests in the different wait paths addressing different storage interleaves.

11. A multiprocessor system as defined in Claim 4, further comprising:

different types of wait path means having inputs respectively connected to different stages of the pipeline means for enabling a plurality of requests to be held while processing of other requests continues in the pipeline.

12. A multiprocessor system as defined in Claim 11, further comprising:

fetch and store types of wait path means, the fetch type having an input connected to one stage of the pipeline means for enabling a plurality of fetch requests to be held at the same time in the fetch wait paths, and the store type having an input connected to a different stage of the pipeline means for enabling a plurality of store requests to be held simultaneously in the store wait paths, while processing of other requests continues in the pipeline.

13. A multiprocessor system as defined in Claim 12, further comprising:

the fetch and store types of wait path means each having an output connected to the priority means for enabling a request ending a wait period in any waiting path to re-enter the pipeline.

14. A multiprocessor system as defined in Claim 11, further comprising:

a plurality of fetch type of wait path means respectively associated with different storage interleaves for receiving requests waiting for accessing the respective interleaves.

15. A multiprocessor system as defined in Claim 11, further comprising:

a plurality of store type of wait path means respectively associated with different storage interleaves for receiving requests waiting for accessing the respective interleaves.

14

# FIG.1

CPU 1 — — — — — — — — CPU N

L1 CACHE          L1 CACHE

L1 MISS          L1 MISS          I/O REQS

REQ 1 — — — REQ N — — REQ K

L2 MISS

L2 CACHE DIRECTORY          L2 CACHE DATA ARRAYS

| ITRLV 1 | ITRLV 2 | ITRLV 3 | ITRLV 4 |

L3 SYSTEM MAIN STORAGE

L3 STORAGE CONTROLLER

| ITRLV 1 | ITRLV 2 | ITRLV 3 | ITRLV 4 |

# FIG.3

LSAR 1          LFAR 2

COMPARE

PENDING CO CONFLICT

# FIG.2

FIG.4

PROCESSOR
SENDS STORAGE REQ.

N — NEEDS REG. = 0 — 31
Y

N — PIPELINE PRIORITY FOR REQUEST — 32
Y

C1 DIRECTORY SEARCH;CONFLICT TEST — 33

C2 CONFLICT ? — 34 — Y → RETURN TO INPUT & SET NEEDS — 35 — C2
N

C2 DIRECTORY HIT ? — Y → CACHE ACCESS — C3 38 → TRANSFER DATA — C4 39 → END
37 — N

C3 ACCESS LRU & FIND SLOT — 46

C4 L2 SLOT AVAIL ? — Y → END
47 — N

ASSIGN L2 SLOT — 48

C5 REQUEST LOADED IN LSAR1 IN SELECTED STORE WAITING PATH — 49 → B TO FIG.6

REQUEST LOADED IN LFAR1 — 43

L3 PRIORITY FOR LFAR1 — 44 — N
Y → A TO FIG.5

FIG.5

(A) FROM FIG.4

61

```
REQUEST TO MS
REQUEST TO LFAR2
```

N ── LFAR1 MODE SET ── Y

62

N ── L2 CASTOUT COMPLETE
OR NOT REQUIRED ── Y

63

N ── PIPELINE PRIORITY
GRANTED FROM LFAR2 ── Y

64

66 ── LOAD DATA INTO CACHE
AND SET LFAR2 MODE

N ── PIPELINE PRIORITY
GRANTED FROM LFAR2 ── Y

67

68 ── UPDATE DIRECTORY

69 ── RESET MODE FOR LFAR2

END

# FIG.6

(B) FROM FIG.4

CP STORE CONFLICTS ? — 81

SET MODE WITH LSAR2 — 82

PIPELINE PRIORITY GRANTED FOR LSAR1 — 83

C3 READ CHANGE LINE ARRAY — 84

PIPELINE PRIORITY GRANTED FOR LSAR1 — 85

UPDATE DIRECTORY L2 — 87

CASTOUT DATA CHANGE — 86

END

LOAD CO ADDR INTO LSAR2 FROM LSAR1 — 91

LOAD CO BUFFER FROM L2 CACHE — 92

UPDATE DIRECTORY — 93

MS PRIORITY GRANTED FOR LSAR2 — 94

END

# FIG.7

C1

L2
DIRECTORY

L2 HIT     L2 MISS

# FIG.8

C1

C2

C3

CHANGED
LINE
ARRAY

# FIG.9

PIPELINE

C1

L2 DIR

C2    HIT

C2

ADDR    C2

C3    HIT

C3    ADDR

CACHE DATA INTERLEAVE ARRAY

DATA

TO REQ CPU

# FIG.10

# FIG.11

SELECTED CO WAITING PATH

# FIG.12

CO BUFFER

DATA TO L3